Europäisches Patentamt

European Patent Office

Office européen des brevets

(11) Veröffentlichungsnummer: **0 333 051**
**A2**

## (12) EUROPÄISCHE PATENTANMELDUNG

(21) Anmeldenummer: 89104247.5

(22) Anmeldetag: 10.03.89

(51) Int. Cl.⁴: **H04M 9/00**

(30) Priorität: 15.03.88 EP 88104105

(43) Veröffentlichungstag der Anmeldung:
20.09.89 Patentblatt 89/38

(84) Benannte Vertragsstaaten:
AT BE DE FR IT NL SE

(71) Anmelder: INDUSTRONIC
INDUSTRIE-ELECTRONIC GMBH & CO. KG
C.-J.-Kolb- Weg 1
D-6980 Wertheim 2(DE)

(72) Erfinder: Linowski, Heinz, E-Ing.
Reichenberger Strasse 67
D-6980 Wertheim(DE)
Erfinder: Unterweger, Hans Georg,Dipl.-Ing.
Bergstrasse 7
D-6982 Freudenberg(DE)
Erfinder: Hildenbrand, Dietmar, Dipl.-Inform.
Finkenstrasse 8
D-6982 Freudenberg(DE)

(74) Vertreter: Zinngrebe, Horst, Dr.rer.nat.
Saalbaustrasse 11
D-6100 Darmstadt(DE)

(54) **Frei programmierbare Vermittlungseinrichtung für eine WL-Lautsprecheranlage.**

(57) Beschrieben wird eine frei programmierbare Vermittlungseinrichtung für eine WL-Lautsprecheranlage mit einem Zentralrechner, in welchem ein Sprech-Verbindungsplan gespeichert ist und an welchen wenigstens eine Linien-Anschalteinheit und eine NF-Koppeleinheit angeschlossen sind, wobei an die Linien-Anschalteinheit mehrere Linien-Leitungen anschließbar sind, von denen jede zu einer Taste an einer von mehreren Sprechstellen der WL-Lautsprecheranlage führt und an die Koppeleinheit mehrere tonfrequente Signale übertragende Leitungen anschließbar sind, von denen jede zu einer der Sprechstellen führt. Damit auch bei einer großen Zahl angeschlossene Sprechstellen jeder Verbindungwunsch rasch aufgebaut werden kann, ist vorgesehen, daß die Koppeleinheit (5) eine NF-Prozessoreinheit (51) aufweist, welche aufgrund von aus dem Zentralrechner (1) empfangenen Steuerdaten den Fluß der in der Koppeleinheit (5) digitalisierten tonfrequenten Signale zwischen wenigstens zwei der angeschlossenen Leitungen (a, b) steuert und daß die Linien-Anschalteinheit (8, 9) eine Linien-Prozessoreinheit (81, 91, 71) aufweist, welche aus den von den angeschlossenen Linien-Leitungen (Li 1, ...) aufgenommenen Signalen für die Linien, die sie bearbeitet, Informationsdaten bildet und dem Zentralrechner (1) oder gegebenenfalls weiteren Linien-Prozessoreinheiten zuführt und aus vom Zentralrechner oder den weiteren Linien-Prozessoreinheiten aufgenommenen Steuerdaten Signale für die angeschlossenen Linienleitungen (Li 1, ...) bildet.

FIG. 1

## Frei programmierbare Vermittlungseinrichtung für eine WL-Lautsprecheranlage

Die Erfindung betrifft eine frei programmierbare Vermittlungseinrichtung für eine WL-Lautsprecheranlage mit einem Zentralrechner, in welchem ein Sprech-Verbindungsplan gespeichert ist und an welchen wenigstens eine Linien-Anschalteinheit und eine Koppeleinheit angeschlossen sind, wobei an die Linien-Anschalteinheit mehrere Linien-Leitungen anschließbar sind, von denen jede zu einer Taste an einer von mehreren Sprechstellen der WL-Lautsprecheranlage führt, und an die Koppeleinheit mehrere tonfrequente Signale übertragende Leitungen anschließbar sind, von denen jede zu einer der Sprechstellen führt.

In der Veröffentlichung Elektro-Anzeiger, 31. Jahrgang, 1978, Nr. 17, Seite 21 und folgende ist eine microprozessorgesteuerte Vermittlungszentrale für eine Sprechanlage beschrieben. Sie enthält als Zentralbaugruppe einen Prozessor, einen Arbeitsspeicher und einen Programmspeicher sowie Ein/Ausgabe-Baugruppen. An die Ein/Ausgabe-Baugruppen sind Verbindungskarten und Sprechstellenkarten angeschlossen, welche die tonfrequente Signale führenden Leitungen aus jeder Sprechstelle aufnehmen. Ferner sind an die Ein/Ausgabe-Baugruppen Linienkarten angeschlossen, welche Linienleitungen bedienen, von denen jede zu einer Taste an einer von mehreren Sprechstellen der Lautsprecheranlage führt. In dem Programmspeicher der Zentralbaugruppe ist ein Sprech-Verbindungsplan in Form eines Programms abgespeichert. Der Prozessor der Zentralbaugruppe fragt zyklisch alle Linienkarten nach dem Zustand der angeschlossenen Linien-Leitungen ab und vergleicht diesen mit dem unmittelbar vorher abgetasteten, im Speicher abgespeicherten Zustand. Ändert sich dieser Zustand etwa durch Betätigen einer Taste an einer der Sprechstellen, wird diese Zustandsänderung vom Prozessor erfaßt, der daraufhin die durch das gespeicherte Programm vorgeschriebenen Steuerfunktionen den Linienkarten und Sprechstellenkarten mitteilt, welche ihrerseits die Durchschaltung ausführen und Steuersignale, wie etwa Besetzt-Signale über die Linien-Leitungen an die Sprechstellen ausgeben.

Diese Vermittlungseinrichtung hat mehrere Nachteile. So sind sämtliche Steuerfunktionen auf die den Prozessor enthaltende Zentralbaugruppe konzentriert. Bei einer großen Zahl von Anschlußmöglichkeiten für Sprechstellen müssen die Steuersignale über einen Bus zwischen den Verbindungskarten, Linienkarten, Sprechstellenkarten und der Zentralbaugruppe ausgetauscht werden. Bei größeren Anlagen erfordert daher der Verbindungsaufbau verhältnismäßig viel Zeit, weil die Zentralbaugruppe mit anderen Aufgaben bereits voll ausgelastet ist.

Zum anderen ist die bekannte Vermittlungseinrichtung auf einen einmal eingespeicherten Sprech-Verbindungsplan festgelegt. Bei einer Änderung des Sprech-Verbindungsplanes als Folge beispielsweise des Anschlusses weiterer Sprechstellen an die Vermittlungseinrichtung muß der Benutzer den Hersteller der Vermittlungseinrichtung um die Erstellung eines neuen, den geänderten Sprech-Verbindungsplan repräsentierenden Programms bitten, das dieser dann in den Arbeitsspeicher fest einspeichert.

Wenn bei der bekannten Vermittlungseinrichtung die Möglichkeit gegeben sein soll, daß jede anschließbare Sprechstelle mit jeder anderen Sprechstelle in Verbindung treten können soll, wird ein außerordentlich hoher Aufwand für das zur Durchschaltung der tonfrequenten Signale erforderliche Koppelfeld notwendig. Wird zur Vermeidung dieses Aufwands unter Verzicht auf die Verbindungsmöglichkeit "jeder-mit-jedem" das Koppelfeld entsprechend verkleinert, scheitert eine Sprech-Verbindungsplan-Änderung dergestalt, daß die Verbindung einer Sprechstelle mit anderen oder weiteren Sprechstellen als ursprünglich vorgesehen werden soll, an den Grenzen der Leistungsfähigkeit des Koppelfeldes. Diese Grenze macht sich besonders dann unangenehm bemerkbar, wenn Gruppen- oder Sammelrufe durchgeführt werden sollen.

Der Erfindung liegt daher die Aufgabe zugrunde eine rechnergestützte Vermittlungseinrichtung zu schaffen, die auch bei einer großen Zahl angeschlossener Sprechstellen jeden Verbindungswunsch rasch aufbauen kann. Ferner soll der schaltungsmäßige Aufwand zur Sicherstellung einer Verbindung "jeder-mit-jedem" gegenüber herkömmlichen Einrichtungen wesentlich verringert werden. Insbesondere soll mit der Erfindung die Flexibilität der Vermittlungseinrichtung dergestalt erhöht werden, daß Änderungswünsche am Sprech-Verbindungsplan leicht berücksichtigt werden können.

Bei der eingangs genannten rechnergestützte Vermittlungseinrichtung ist dazu erfindungsgemäß vorgesehen, daß die Koppeleinheit eine Prozessoreinheit aufweist, welche aufgrund von aus dem Zentralrechner empfangenen Steuerdaten den Fluß der in der Koppeleinheit digitalisierten tonfrequenten Signale zwischen wenigstens zwei der angeschlossenen Leitungen steuert, und daß die Linien- Anschalteinheit eine Linien-Prozessoreinheit aufweist, welche aus den von den angeschlossenen Linien-Leitungen aufgenommenen Signalen für die Linien, die sie bearbeitet, Informationsdaten bildet und dem Zentralrechner oder gegebenenfalls weiteren Linien-Prozessoreinheiten zuführt und aus vom Zentralrechner oder den weiteren Linien-Prozessoreinheiten aufgenommenen Steuerdaten Signale für die angeschlossenen Linien-Leitungen bildet. Durch die Erfindung wird der Zentralrechner in Stand gesetzt, auf über die Linien-Leitungen empfangene

Steuersignale jederzeit rasch zu reagieren, indem er die erforderlichen Funktionen durch die NF-Prozessoreinheit und die Linien-Prozessoreinheiten ausführen läßt. Da bei der Durchschaltung lediglich der Fluß digitalisierter NF-Signale gesteuert werden muß, ist eine Verbindungsmöglichkeit "jeder-mit-jedem" ohne besonderen Aufwand jederzeit sichergestellt.

Wenn in zweckmäßiger Ausgestaltung der Erfindung an den Zentralrechner eine Eingabeeinheit anschließbar ist, mit welcher ein gewünschter Verbindungsplan in den Zentralrechner eingebbar ist, kann ein abgespeicherter Sprech-Verbindungsplan in einfacher Weise durch den Betreiber der Lautsprecheranlage selbst abgeändert werden. Dadurch gewinnt die erfindungsgemäße Vermittlungseinrichtung eine Flexibilität, die es dem Benutzer der Lautsprecheranlage ermöglicht, diese jederzeit nach einem aktuellen Sprech-Verbindungsplan arbeiten zu lassen, ohne daß dadurch Eingriffe Dritter oder Änderungen an der Verdrahtung der Vermittlungseinrichtung erforderlich wären.

Zweckmäßig ist in einem nichtflüchtigen Massenspeicher des Zentralrechners ein erstes Programm gespeichert, welches aus den über die Eingabeeinheit eingegebenen Daten eines Sprech-Verbindungsplans einen internen Verbindungsplan erstellt und im Speicher abspeichert, welcher das zu jeder möglichen Verbindung zwischen Sprechstellen gehörende Durchführungsprogramm enthält. In bevorzugter Weiterbildung ist vorgesehen, daß in der erfindungsgemäßen Vermittlungseinrichtung mehrere Sprech-Verbindungspläne gespeichert werden können, wobei der Zentralrechner neben dem Massenspeicher wenigstens eine Floppy-Disk Station sowie eine programmgesteuerte Übergabeeinrichtung aufweist, welche das Abspeichern eines oder mehrerer eingegebener Sprech-Verbindungspläne oder eines oder mehrerer interner auf einem anderen Rechner erarbeiteter Verbindungspläne erlaubt. Um beim Einschalten der erfindungsgemäßen Vermittlungseinrichtung die Auswahl eines der im Massenspeicher abgespeicherten Verbindungspläne zu ermöglichen, ist zweckmäßig vorgesehen, daß der Zentralrechner eine von der Eingabeeinheit ansteuerbare Auswahleinrichtung aufweist, welche die Auswahl eines der abgespeicherten Sprechverbindungspläne für den Betrieb der NF-Koppeleinheit sowie der Linien-Anschalteinheit erlaubt. Der Massenspeicher ist zweckmäßig eine im Zentralrechner fest eingebaute Hard-Disk, wobei eine Selbstladeeinrichtung vorgesehen ist, welche beispielsweise nach Stromausfall ein Laden mit dem zuletzt benutzten auf dem Massenspeicher gespeicherten Programm erlaubt. Zweckmäßig weist der Zentralrechner eine freie Schnittstelle auf, an welche eine Datenübertragungsleitung aus einer entfernten Eingabeeinheit anschließbar ist, so daß beispielsweise von einem zentralen Büro aus mehrere WL-Lautsprecheranlagen durch Ändern und Laden von Verbindungsplänen verwaltet werden können. Außerdem kann beispielsweise die Zentrale im Fehlerfall über ein Modem eine Telefonverbindung wählen und eine Alarmmeldung an eine zentrale Stelle ausgeben.

Weiterhin ist vorteilhafterweise vorgesehen, daß der Zentralrechner eine Protokolliereinrichtung aufweist, die das Abspeichern aller während einer vorgegebenen Zeitspanne realisierten Verbindungen zwischen Sprechstellen und deren Dauer erlaubt. Dazu kann der Zentralrechner mit einem Druckeranschluß sowie mit einer programmgesteuerten Drucker-Ausgabeeinrichtung ausgerüstet sein, welche das Ausdrucken von abgespeicherten Verbindungsplänen oder von abgespeicherten Protokollen oder Fehlermeldungen erlaubt.

Wenn in bevorzugter Ausführungsform der Erfindung eine Pegelsteuerung für die von der NF-Koppeleinheit abgegebenen tonfrequenten Signale vorgesehen ist, die durch Steuerdaten, welche aus einem im Zentralrechner enthaltenen Programm von diesem abgeleitet werden, steuerbar ist, kann beispielsweise bei Nachtbetrieb der Vermittlungseinrichtung der Lautstärkepegel in den angeschlossenen Sprechstellen durch Programm-Anweisung abgesenkt werden.

Wenn die Eingabeeinheit eine Tastatur sowie einen Monitor umfaßt, ist eine Prüfung der Vermittlungseinrichtung sowie der an sie angeschlossenen Sprechstellen in Weiterbildung der Erfindung möglich, wenn der Zentralrechner mit einer programmgesteuerten Prüfeinrichtung ausgerüstet ist, welche durch die Eingabeeinheit ansteuerbar ist und wahlweise einzelne Sprechwege zu schalten, einen Dauerton auf eine der Sprechstellen zu geben, die Ausgabe von Steuersignalen über eine oder mehrere Linien-Leitungen zu veranlassen oder Betätigungen von Tasten an den Sprechstellen zu protokollieren gestattet.

Schließlich erweist es sich als vorteilhaft, wenn der Zentralrechner in dem internen Verbindungsplan eine Prioritätseinrichtung aufweist, die wahlweise jeder der anschließbaren Linientasten hinsichtlich ihrer Verbindungswünsche eine Priorität aus einer Anzahl von Stufen zuweist.

Wenn in Weiterbildung der Erfindung an den Zentralrechner mehrere Linienprozessoreinheiten angeschlossen sind, kann die Arbeitsbelastung des Zentralrechners weiter dadurch herabgesetzt werden, daß in jeder Linien-Prozessoreinheit wenigstens der Teil des aktuellen internen Verbindungsplans gespeichert ist, welcher die von den Linien-Prozessoreinheit bedienbaren Linien-Leitungen betrifft. Dabei eröffnet sich die Möglichkeit, daß die Linien-Prozessoreinheiten unmittelbar miteinander ohne Zwischenschaltung des Zentralrechners Steuersignale austauschen, welche zum Aufbau oder zur Unterbrechung einer Sprechverbindung erforderlich sind.

Weitere zweckmäßige Ausgestaltungen der Erfindung sind in den Unteransprüchen angegeben.

3

Die Erfindung wird nachstehend anhand der in der beigefügten Zeichnung dargestellten Ausführungsbeispiele im einzelnen beschrieben. Es zeigen:

Fig. 1: ein schematisches Blockdiagramm einer rechnergestützten WL-Zentrale;

Fig. 2: ein schematisches Blockdiagramm eines NF-Prozessors;

Fig. 3: ein schematisches Blockdiagramm einer NF-Anschaltkarte;

Fig. 4: ein schematisches Blockdiagramm eines Zentralrechners in Form eines Vermittlungsrechners;

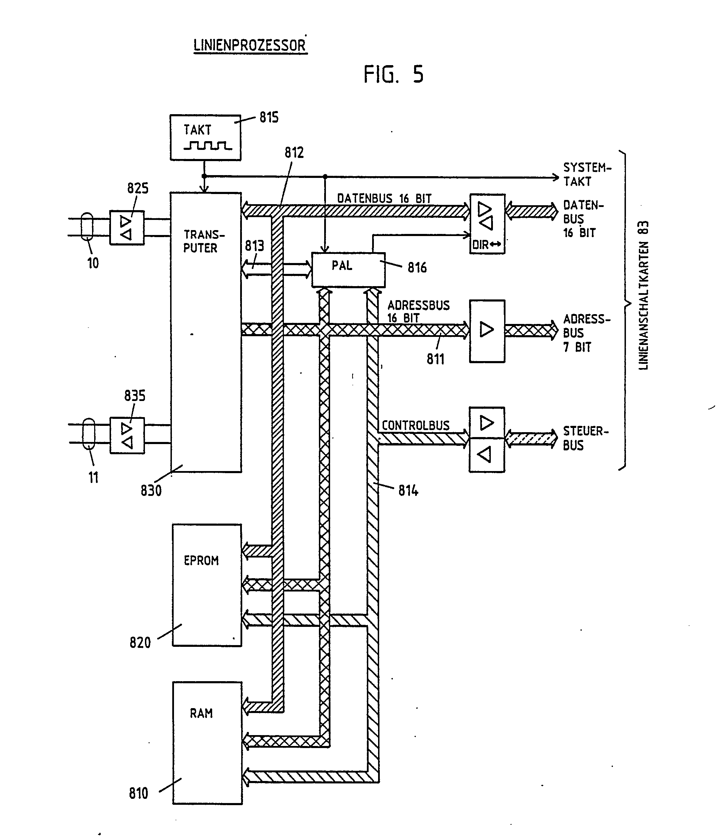

Fig. 5: ein schematisches Blockdiagramm eines Linien-Prozessors;

Fig. 6: ein schematisches Blockdiagramm einer Linien-Anschaltkarte;

Fig. 7: ein schematisches Blockdiagramm einer modifizierten Anschaltkarte für Zwei-Drahtanschluß von Sprechstellen; und

Fig. 8: ein schematisches Blockdiagramm einer microprozessorgesteuerten Sprechstelle.

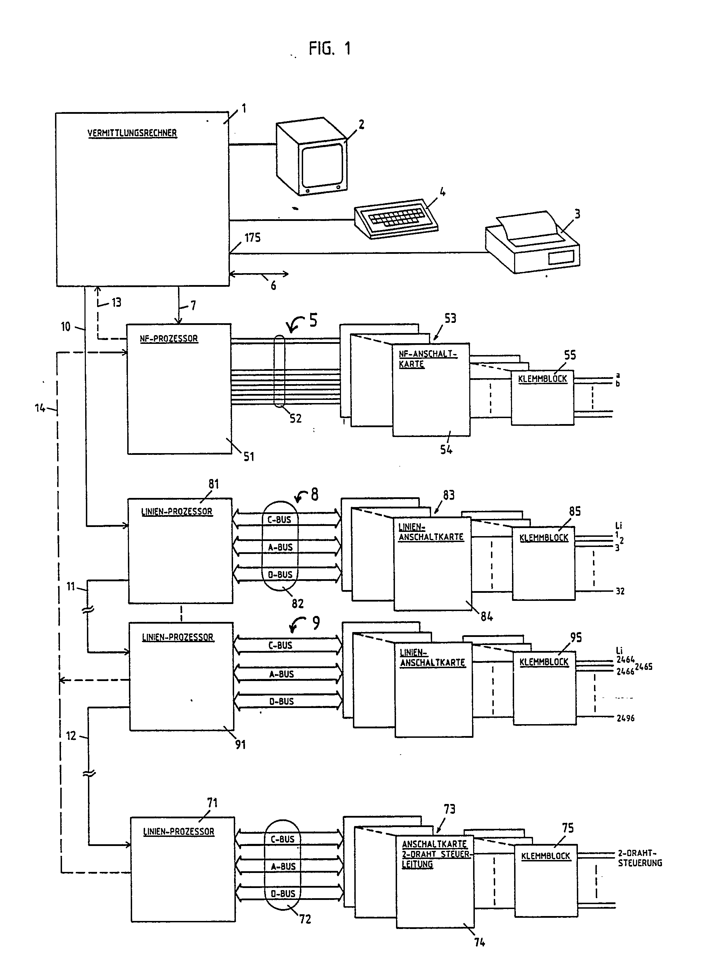

Die in Fig. 1 im Ganzen dargestellte Vermittlungseinrichtung umfaßt einen Vermittlungsrechner 1, an welchen als Eingabeeinheit eine Tastatur 4 und ein Monitor 2 angeschlossen werden können. Ferner kann an den Vermittlungsrechner 1 ein Drucker 3 über eine Schnittstelle 175 sowie über eine freie Schnittstelle 6 eine externe Datenübertragungsleitung angeschlosen werden. Bei Bedarf können weitere Schnittstellen vorgesehen sein.

Die Vermittlungseinrichtung umfaßt ferner eine im Ganzen mit 5 bezeichnete Koppeleinheit zum Durchschalten und Unterbrechen von NF-Signalen sowie eine im Ganzen mit 8 bezeichnete Linien-Anschalteinheit zur Auswertung und Übertragung von Steuersignalen aus nicht dargestellten Sprechstellen herkömmlicher Bauart. Zu der Linien-Anschalteinheit 8 können eine oder mehrere weitere Linien-Anschalteinheiten parallel arbeiten, von denen eine im Ganzen mit 9 bezeichnet ist. Die Koppeleinheit 5 sowie die Linien-Anschalteinheiten 8, 9 sind zum Datenaustausch mit dem Vermittlungsrechner 1 gekoppelt.

Die Koppeleinheit 5 weist eine Prozessoreinheit 51 auf, die in einem ersten Ausführungsbeispiel der Erfindung über eine 8-Bit parallele Anschlußleitung 7 mit dem Vermittlungsrechner 1 verbunden ist. Weiter ist die Prozessoreinheit 51 über eine insgesamt mit 52 bezeichnete Gesamtheit von Daten- und Steuersignal-Leitungen mit maximal 32 NF-Anschaltkarten 53 verbunden, die alle elektrisch gleich aufgebaut sind und über die Daten- und Steuer-Leitungen 52 an die Prozessoreinheit 51 parallel angeschaltet sind. Ausgangsseitig kann jede NF-Anschaltkarte 53 mit einem Klemmblock 55 verbunden sein, der Anschluß ist aber auch direkt möglich. Von den maximal zweiunddreißig möglichen Klemmblöcken 55 besitzt jeder acht Klemmenpaare für maximal acht anschließbare Sprechstellen oder andere Tonfrequenzquellen oder-senken, und zwar ist an jedem Klemmblock das tonfrequente Signale übertragende Leitungspaar a, b aus einer der acht anschließbaren Sprechstellen angeschlossen. An die Koppeleinheit 5 können insgesamt 8 x 32 = 256 Sprechstellen angeschlossen werden.

Die Linien-Anschalteinheiten 8, 9 sind elektrisch gleichartig aufgebaut, so daß es für die nachfolgende Erläuterung der Erfindung genügt, nur die Linien-Anschalteinheit 8 im einzelnen zu beschreiben. Die Linien-Anschalteinheit 8 umfaßt eine Linien-Prozessoreinheit 81, welche mit dem Vermittlungsrechner 1 über eine serielle Datenübertragungsleitung 10 angeschlossen ist, deren Übertragungsgeschwindigkeit 5 Mbit/s betragen kann. Die Linien-Prozessoreinheit 91 der Linien-Anschalteinheit 9 ist mit der seriellen Datenleitung 10 über deren elektrische Verlängerung 11 gekoppelt, wobei diese Kopplung in der Linien-Prozessoreinheit 81 stattfindet. Entsprechend sind die Linien-Prozessoreinheiten eventuell vorgesehener weiterer Linien-Anschalteinheiten an die seriellen Daten-Leitung 10 angeschlossen.

Die Linien-Prozessoreinheit 81 ist über eine im Ganzen mit 82 bezeichnete Sammelleitung an bis zu 13 parallel geschaltete Linien-Anschaltkarten 83 angeschlossen, wobei die Sammelleitung, wie dargestellt, einen C-Bus für Steuerdaten, einen A-Bus für Adreßdaten und einen D-Bus für Informationsdaten enthält. Jede der dreizehn Linien-Anschaltkarten ist elektrisch gleich aufgebaut und kann zum Anschluß an die aus den anschließbaren Sprechstellen kommenden Linien-Leitungen mit je einem Linien-Klemmblock 85 versehen sein. An jede Linien-Anschalteinheit können die Linien-Leitungen Li 1, Li 2, Li 3,... Li 32 von Sprechstellen angeschlossen werden. Insgesamt sind an die Linien-Anschalteinheit 8 daher 13 x 32 = 416 Linien-Leitungen aus Sprechstellen oder anderen Steuereinheiten anschließbar. Durch Parallelschaltung mehrerer Linien-Anschalteinheiten 9 kann die anschließbare Linien-Leitungszahl anschließbaren 256 Sprechstellen auf insgesamt 2496 erhöht werden, wobei die letzte Linien-Anschalteinheit 9 dann die Linien Li 2464...Li 2496 bedient.

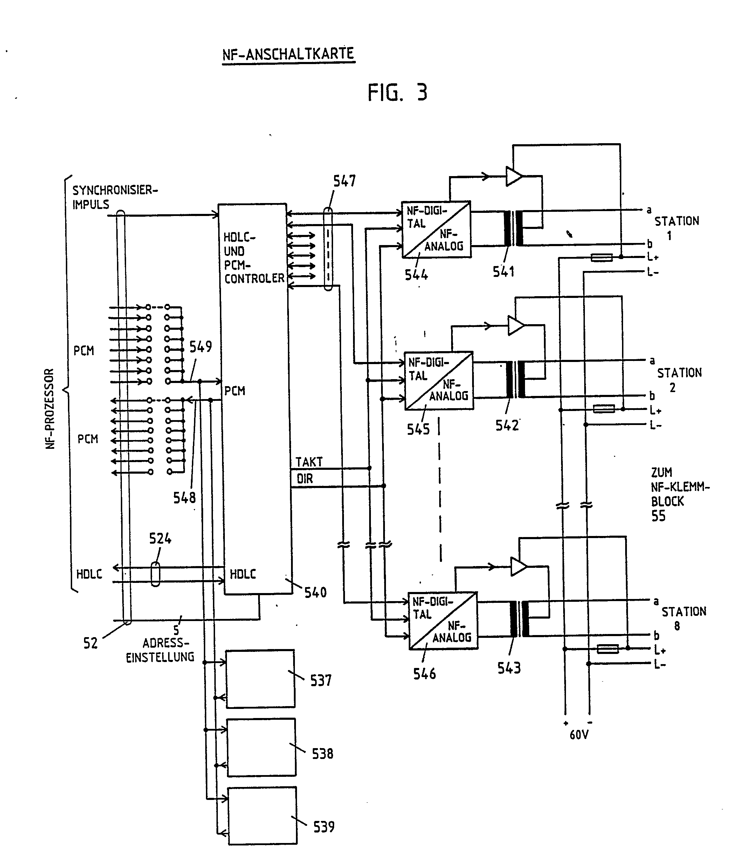

Nachfolgend wird zunächst der Fluß der tonfrequenten Signale in der Koppeleinheit 5 beschrieben, mit welchem ein Verbindungsaufbau zwischen zwei odere mehreren Sprechstellen oder die Trennung ihrer Verbindung durchgeführt wird. Wie Fig. 3 anhand des Blockschaltbilds der NF-Anschaltkarte 54 aus der Gesamtheit der NF-Anschaltkarten 53 erläutert, sind die tonfrequente Signale führenden Leitungen a, b jeweils über einen Übertrager 541, 542, 543 je einem Analog-Digital-Wandler 544, 545, 546 zugeführt. Die

4

Anschaltkarte 54 enthält also acht A/D-Wandler, von denen jeder das über den zugehörigen Übertrager eingegeben analoge niederfrequente Signal in eine Folge von 8-Bit langen Datenwörtern digitalisiert. Dazu werden die acht Ausgangsleitungen, die im Ganzen mit 547 bezeichnet sind, der acht A/D-Wandler 544...546 parallel einer Steuereinheit 540 zugeführt. Die Steuereinheit 540 besitzt eine Ausgangsleitung 548, aus welcher die Datenwörter aus der Digitalisierung des empfangenen tonfrequenten Signals seriell ausgegeben werden. Die Steuereinheit 540 kann entweder ein Parallel/Serien-Wandler sein, der die jeweils gleichzeitig über die Leitungen 547 ankommenden 8-Bit Datenwörter seriell auf die Leitung 548 gibt. Bevorzugt wird jedoch eine zeitlich versetzte Abtastung der empfangenen analogen tonfrequenten Signale in den A/D-Wandlern 544...546 derart, daß die 8-Bit Wörter aus einer Abtastung aller acht empfangenen Analog-Signale zeitlich nacheinancher auf den Leitungen 547 auftreten. Ein Abtastzyklus dauert etwa 50 $\mu$s.

Die Ausgangsleitung 548 ist, wie im unteren Teil der Fig. 3 dargestellt, mit den entsprechenden Ausgangsleitungen der Steuereinheiten 537, 538, 539 dreier weiterer NF-Anschaltkarten verbunden, die zu der Gesamtheit der NF-Anschaltkarten 53 gehören. Die Synchronisation der insgesamt vier NF-Anschaltkarten ist so gesteuert, daß auf der Ausgangsleitung 548 seriell 4 x 8 = 32 Datenwörter zu je 8 Bits aus einer Abtastung von insgesamt zweiunddreißig von vier NF-Anschaltkarten aufgenommenen Analog-Signalen auftreten. Diese zweiunddreißig Abtast-Datenwörter gelangen über eine der Leitungen 52 zur Prozessoreinheit 51, welche je zweiunddreißig der über die mit der Leitung 548 verbundene Leitung übertragenen Abtast-Datenwörter als einen Abtast-Datenwortrahmen erfaßt und weiter verarbeitet. Da an die Prozessoreinheit 51 insgesamt zweiunddreißig NF-Anschaltkarten 54 angeschlossen werden können, je vier der NF-Anschaltkarten 53 ihre Abtast-Datenwörter über eine der Ausgangsleitung 548 entsprechende Leitung abgeben, sind alle Anschaltkarten 53 mit insgesamt acht parallelen Abtastdaten-Leitungen 52 verbunden. Zu der Sammelleitung 52 gehören weiterhin Steuerleitungen, welche Synchronisierimpulse und Steuersignale führen.

Der Datenstrom in der umgekehrten Richtung von der Prozessoreinheit 51 zu den NF-Anschaltkarten 53 geschieht über acht Datenleitungen, von denen jeweils eine mit einer Eingangsleitung 549 für die Steuereinheit 540 sowie für die entsprechenden Steuereinheiten 537, 538, 539 der drei weiteren NF-Anschaltkarten verbunden ist. Die Steuereinheit 540 nimmt aus dem ankommenden, zweiunddreißig Datenwörter umfassenden Datenwortrahmen beispielsweise die ersten acht 8-Bit Datenwörter heraus und verteilt sie nacheinander auf die Leitungen 547, die zu den A/D-Wandlern 544...546 führen. Derjenige A/D-Wandler, der an seinem Eingang digitalisierte tonfrequente Signale empfängt, setzt diese in die analoge Form um und gibt sie über den an ihn angeschlossenen Übertrager 541...543 auf die zugehörige a, b-Leitung. Die weiteren Teile des Datenwortrahmens werden nacheinander von den Steuereinheiten 537, 538, 539 in entsprechender Weise an die jeweils zugehörigen A/D-Wandler übertragen.

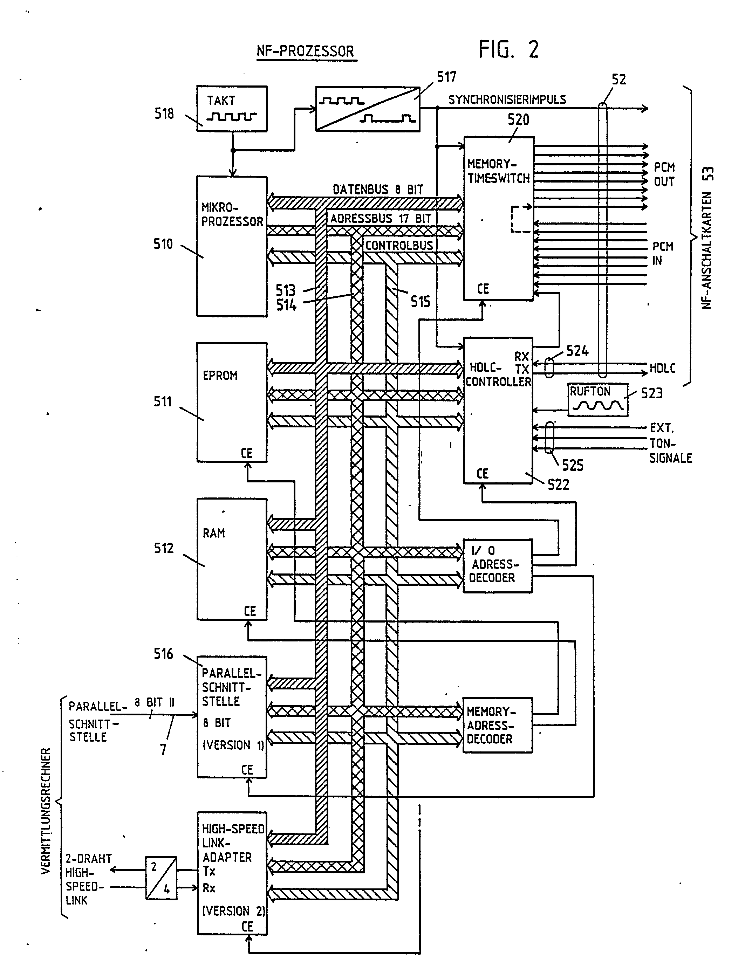

Die Prozessoreinheit 51 enthält gemäß Fig. 2 einen Microprozessor 510 mit zugehörigen Speichern 511, 512, mit denen er über einen 8-Bit-breiten Datenbus 513, einen 17-Bit breiten Adreßenbus 514 und einen Steuersignalbus 515 verbunden ist. Der Microprozessor 510 ist an die 8-Bit breite Datenleitung 7 des Vermittlungsrechners 1 über eine Schnittstelle 516 angeschlossen. Als wesentlichen Baustein enthält die Prozessoreinheit 51 einen Verschiebespeicher 520, der an die Busse 513, 514, 515 sowie an die gemeinsame Taktquelle 518 über einen Teiler 517 angeschlossen ist. Ferner ist der Verschiebespeicher 520 an die Datenleitungen aus der Sammelleitung 52 angeschlossen. Der Verschiebespeicher 520 ermöglicht das Abspeichern der auf den acht parallelen Leitungen ankommenden Abtastdatenwörter an Adressen, die ihm vom Microprozessor 510 über den Datenbus 513 vorgeschrieben werden können. Der Verschiebespeicher 520 kann daher beispielsweise jeweils den gleichen Zeitschlitz aus einem der aufeinander folgenden, auf einer der acht parallelen Abtastwortleitungen ankommenden 32-Datenwortrahmen, welcher einem 8-Bit Datenwort entspricht, das aus einer Abtastung eines von einer bestimmten Sprechstelle ankommenden tonfrequenten Signals entstanden ist, an einer Adresse abspeichern, die einem anderen Zeitschlitz innerhalb des aus dem Verschiebespeicher 520 über eine (andere) der angeschlossenen acht parallelen Datenwortleitungen entspricht. Die Vermittlung zwischen zwei oder mehreren Sprechstellen kommt also befehlsabhängig durch eine entsprechende Verteilung des Flusses der über die acht parallelen Datenleitungen ankommenden 8-Bit Datenwörter aus je einem 32-Datenwortrahmen zustande. Die Unterbrechung einer aufgebauten Verbindung wird einfach dadurch bewirkt, daß die betreffenden Datenwörter an einer Adresse im Verschiebespeicher 520 abgespeichert werden, der keine Sprechstelle zugeordnet ist.

Die Prozessoreinheit 51 enthält ferner eine Steuerung 522, an die unter anderem ein Ruftongenerator 523 sowie weitere Tonsignalleitungen 525 aus nicht dargestellten externen Tonsignalquellen angeschlossen ist. Nicht dargestellt sind A/D-Wandler zum Digitalisieren der aus dem Ruftongenerator 523 sowie über die Signalleitungen 525 aufgenommenen Analogsignale in Datenwörter, welche die Steuerung 522, die der Steuereinheit 540 ähnlich sein kann, verarbeiten können. Diese Datenwörter können durch Befehl aus dem Vermittlungsrechner 1 in einen oder mehrere der vom Verschiebespeicher 520 abgehenden Zeitschlitze eingefügt werden. Die Steuerung 522 bildet im übrigen Steuersignale für die Steuereinheiten 537...540 auf den Anschaltkarten 53 über zur Sammelleitung 52 gehörende Steuersignalleitungen 524. Entsprechend werden aus dem Teiler 517 entnommene Synchronisierimpulse über die Sammelleitung 52 den Steuereinheiten 537...540 zugeführt.

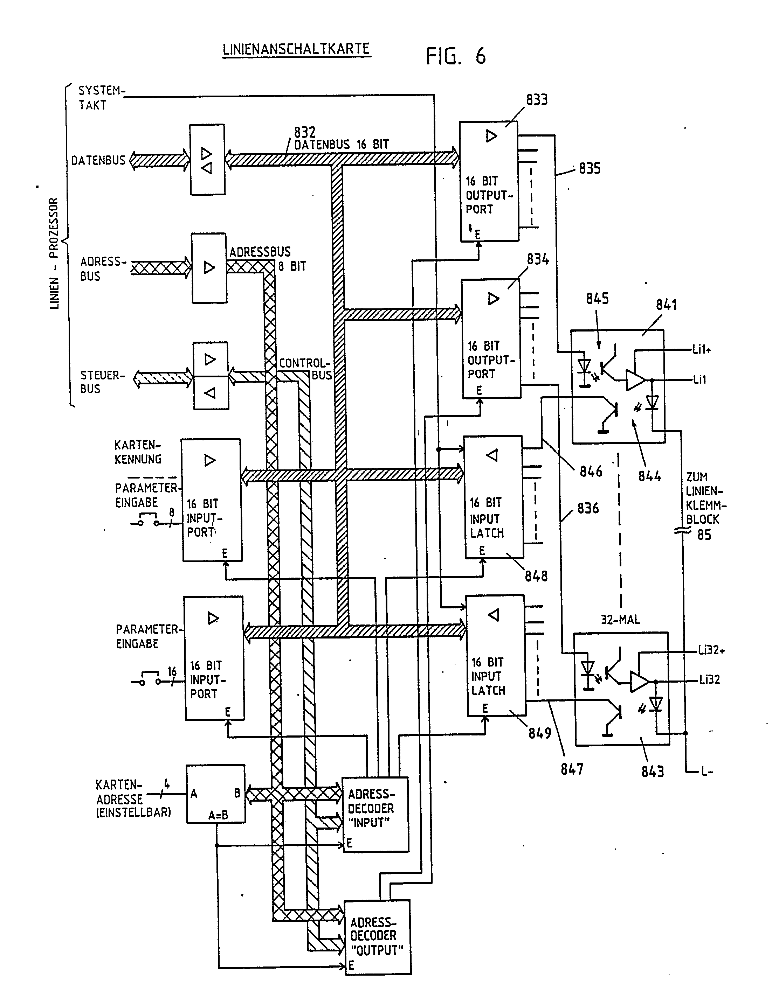

Es wird nachfolgend die Erfassung und die Erzeugung von Steuersignalen beschrieben, die aus den Linien-Leitungen Li 1, Li 2...Li 2496 der angeschlossenen Sprechstellen ankommen bzw. auf diese gegeben werden. Als Beispiel ist in Fig. 6 schematisch das Blockschaltbild einer Linienanschaltkarte 84 aus der Gesamtheit der bis zu dreizehn Linienanschaltkarten 83 angegeben. Die Linienanschaltkarte 84 besitzt zweiunddreißig Trenneinheiten 841, 843, von denen jede an einer Linienleitung Li 1...Li 32 aus einer oder mehreren Sprechstellen angeschlossen werden kann. Die Trenneinheit 841 weist einen Eingangs-Optokoppler 844 sowie einen Ausgangs-Optokoppler 845 auf. Jeder der beiden Optokoppler 844, 845 gewährleistet zunächst eine galvanische Trennung zwischen den zu den Sprechstellen führenden Linienleitungen einerseits und der Vermittlungseinrichtung andererseits. Damit bleibt die Vermittlungseinrichtung vor Überspannung oder Kurzschluß auf den Linien-Leitungen geschützt, bleibt potentialmäßig unabhängig von Potentialverschiebungen auf den Linien-Leitungen und vor dem Einfluß von Streusignalen bewahrt, die über die Linien-Leitungen herangeführt werden könnten. Ferner stellen die Trennstufen 841, 843 Pegelwandler dar, die die auf den Linien-Leitungen Li 1, ... üblicherweise vorhandene Spannung von 60 Volt auf die interne Spannung von 5 Volt herabsetzen, bzw. bis Abgabe eines Steuersignals auf eine Linien-Leitung von 5 Volt auf 60 Volt heraufsetzen.

Die Linien-Anschaltkarte 84 besitzt zwei Eingangsregister 848, 849 von je 16-Bit Breite. Die Eingangsleitung 846 der ersten Trennstufe 841 sowie die weiteren fünfzehn gleichartigen Eingangsleitungen der weiteren fünfzehn Trennstufen sind an das erste Eingangsregister 848 angeschlossen. Entsprechend sind die Eingangsleitungen 847 der sechzehn weiteren Trennstufen 843 an das zweite Eingangsregister 849 angeschlossen. Jedes der beiden Eingangsregister 848, 849 ist ausgangsseitig an einen 16-Bit breiten Datenbus 832 angeschlossen. Über eine Treiberstufe führt der Datenbus 832 zu dem D-Bus aus der Sammelleitung 82 und von diesem über eine weitere Treiberstufe zu einem Linienprozessor 830 in der Linienprozessoreinheit 81.

Die Linienanschaltkarte 84 weist weiterhin zwei Ausgangsregister 833 und 834 von je sechzehn Bit Breite auf, welche eingangsseitig an den Datenbus 832 angeschlossen sind und von deren Ausgangsleitungen 835, 836 je eine Ausgangsleitung mit dem Ausgangs-Optokoppller 845 jeder der zweiunddreißig Trennstufen 841, 843 verbunden ist. Wenn daher in einem der Ausgangsregister 833, 834 unter Steuerung des Linienprozessors 830 an einer oder mehreren der Speicherplätze beispielsweise ein Eins-Bit gesetzt wird, wird dieses von dem mit den betreffenden Speicherplätzen über die zugehörige Ausgangsleitung verbundenen Optokoppler auf ein 60 Volt-Signal auf der an ihn angeschlossenen Linien-Leitung Li übertragen, von der das Signal zu der angeschlossenen Taste oder Besetztleuchte der angeschlossenen Sprechstelle gelangt. Wenn umgekehrt von einer Taste einer angeschlossenen Sprechstelle ein 60 Volt Signal über eine der Linien-Leitungen Li auf einen Eingangs-Optokoppler gelangt, wird die zugehörige Speicherstelle in einem der Eingangsregister 848, 849 gesetzt.

Die Linienprozessoreinheit 81 enthält den erwähnten Linienprozessor 830 sowie die zu seinem Arbeitsbereich gehörenden Speicher RAM 810 und EPROM 820, mit denen er über einen Adressenbus 811, einen Datenbus 812 und einen Steuerbus 813, 814 verbunden ist. Ferner ist eine Taktquelle 815 vorgesehen, welche den Linienprozessor 830, einen Dekoder 816 sowie die Eingangsregister 848 und 849 auf der Linien-Anschaltkarte 84 synchronisiert. An den Ausgang des Linienprozessors 830 ist ein Ausgangstreiber 825 angeschlossen, welcher Datentelegramme seriell auf die Datenleitung 10 ausgibt und von dieser zur Weitergabe an den Linienprozessor 830 empfängt. Man sieht, daß der Datenbus 812 von 16-Bit Breite, der Adressenbus 811 sowie der Steuerbus 814 die Verlängerungen des D-Busses, A-Busses und C-Busses in der Linienprozessoreinheit darstellen.

Im Betrieb gibt der Linienprozessor 830 Steuerbefehle über die Leitung 813 auf den Dekoder 816, welcher diese daraufhin entschlüsselt, ob die Befehle die Datenverwaltung mit den Speichern 810, 820 oder die Linien-Anschaltkarte 84 betreffen. Zu den die Linien-Anschaltkarte 84 betreffenden Steuerbefehlen gehören solche, die einen Abfragezyklus über den Inhalt oder Status der Eingangsregister 848, 849 auslösen. Dieser den Statusabfragezyklus auslösende Befehl tritt alle 5 ms oder in einem kürzeren Zeitmaß auf. Während eines Statusabfragezyklus werden die Eingangsregister aller angeschlossenen dreizehn Linienanschaltkarten 83 der Reihe nach adressiert und ihr Inhalt wird in dem Linienprozessor 830 vorübergehend abgespeichert. In dem Linienprozessor 830 wird auch der Inhalt aller Eingangsregister der angeschlossenen Linien-Anschaltkarten 83 abgespeichert, der sich im Zuge des nächsten Statusabfragezyklus ergibt.

In dem Linienprozessor 830 ist eine nicht dargestellte Vergleichseinrichtung enthalten, welche die Inhalte zweier aufeinanderfolgender Statusabfragen vergleicht und aus jeder Änderung ein Datentelegramm bildet. Hat sich beispielsweise der Inhalt einer Speicherzelle in einem der abgefragten Eingangsregister von Null auf Eins geändert, weil etwa die der Speicherzelle zugeordnete Taste einer angeschlossenen Sprechstelle gedrückt wurde, enthält das daraufhin gebildete Datentelegramm diese Zustandsänderung sowie eine Kennung (Liniennummer Li) der betreffenden Speicherzelle des Eingangsregisters. Dieses Datentelegramm, zu dem auch die Adresse des sendenden Linienprozessors gehört, wird über Leitung 10 dem Vermittlungsrechner zugesandt.

Umgekehrt enthält jedes vom Vermittlungsrechner 1 auf die Leitung 10 gegebene, für einen der Linienprozessoren in den Linienprozessoreinheiten 81, 91 bestimmtes Datentelegramm neben der Adresse des Ziel-Linienprozessors die Liniennummer Li und ein Datenwort, welches dem Linienprozessor die Art des von ihm über die angeschlossenen Linien-Leitung auszusendenden Signals (Besetztsignal, Anrufsignal, etc) durch entsprechende Eingabe in das zugehörige Ausgangsregister mitteilt. Ist das Datentelegramm beispielsweise nicht für den Linienprozessor 830 der Linienprozessoreinheit 81 bestimmt, gibt der Linienprozessor 830 das Datentelegramm unverändert über seinen weiteren Ausgangstreiber 835 auf die Leitung 11, von der einer der weiteren Linienprozessoren das Datentelegramm abnimmt.

Wie erwähnt, werden die Datentelegramme über die Leitungen 10, 11 mit einer relativ hohen Geschwindigkeit von etwa 5 Mbit/s zwischen dem Vermittlungsrechner 1 und den angeschlossenen Linienprozessoren übertragen.

In der vorstehend beschriebenen Ausführungsform der Erfindung ist die Prozessoreinheit 51 über eine acht Bit breite Datenleitung 7 mit dem Vermittlungsrechner verbunden. In einer anderen Ausführungsart kann die Schnittstelle 516 jedoch auch so ausgelegt sein, daß die Prozessoreinheit 51 wie auch die Linienprozessoreinheiten 81, 91 an die serielle 5 Mbit/s-Datenleitung, die in Figur 1 als Leitung 13, 14 gestrichelt eingetragen ist, angeschlossen ist.

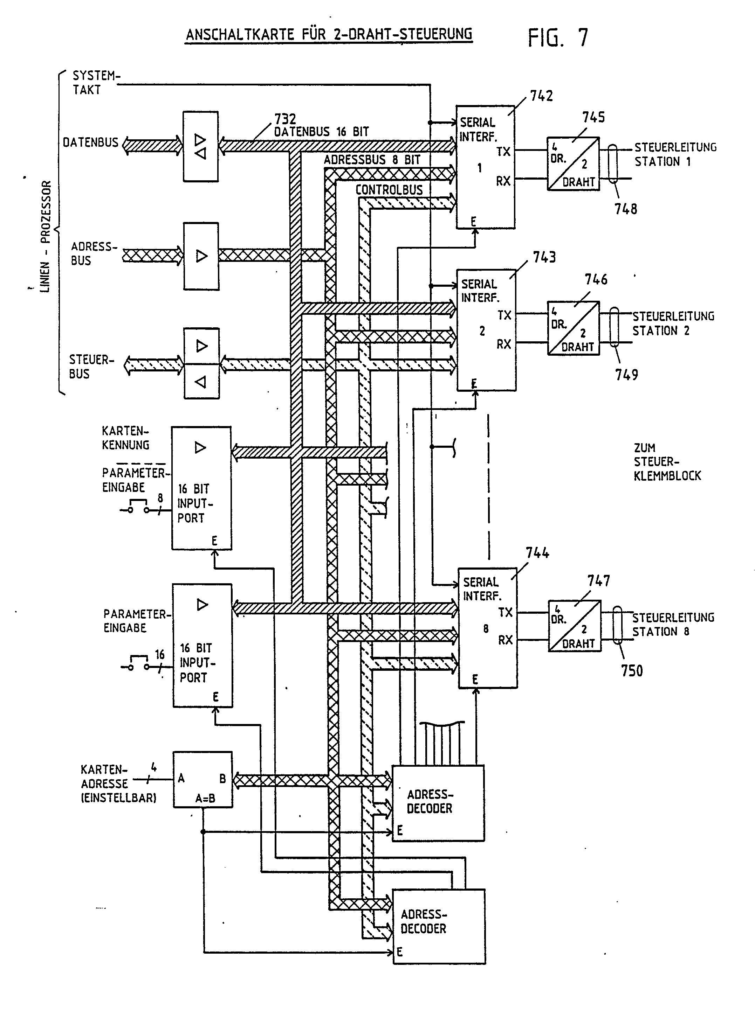

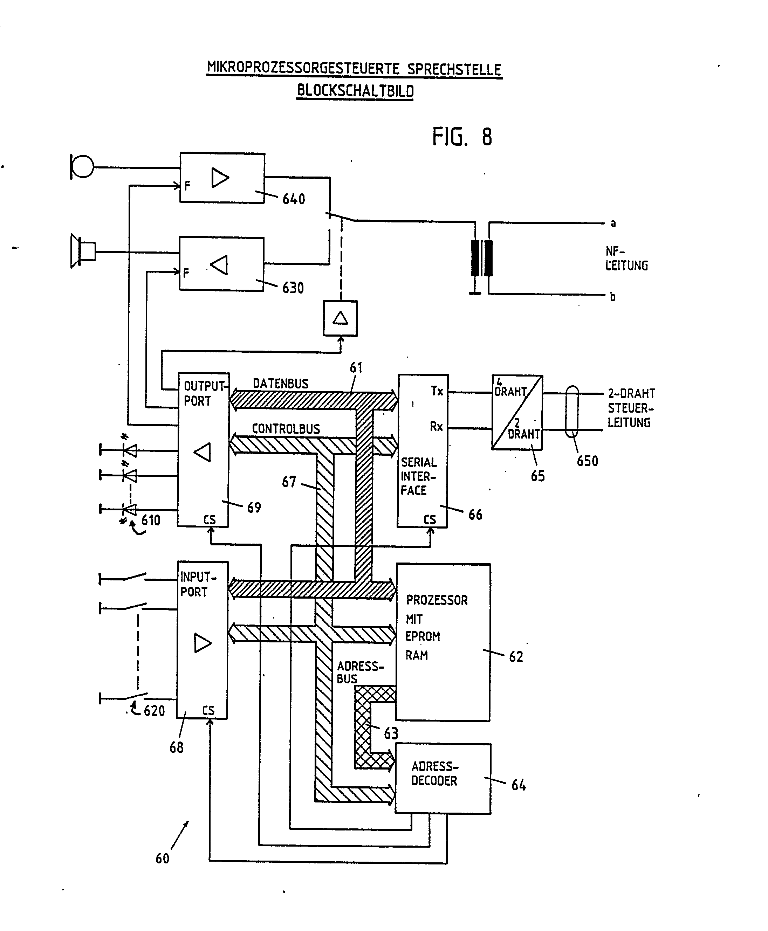

Die Erfindung ermöglicht jedoch noch eine weitere Ausführungsform, welche in Figur 1 unten sowie in den Figuren 7 und 8 dargestellt ist. An die von der Linienprozessoreinheit 91 ausgehende Verlängerung 12 der Datenleitung 10 ist eine Linienprozessoreinheit 71 angeschlossen, welche in ihrem Aufbau der Linienprozessoreinheit 81 gleicht und daher nicht beschrieben zu werden braucht. Die Linienprozessoreinheit 71 steht über eine Sammelleitung 72, welche der Sammelleitung 82 entspricht, mit einer Gruppe von bis zu dreizehn parallelen Steuerlinien-Anschaltkarten 73 in Verbindung, von denen Steuerlinien-Anschaltkarte 74 in Figur 7 schematisch dargestellt ist. Wie man sieht unterscheidet sich diese Steuerlinien-Anschaltkarte 74 von der Linien-Anschaltkarte 84 durch den Ersatz der Eingangsregister 848, 849 sowie der Ausgangsregister 833, 834 durch acht Schnittstelleneinheiten, von denen die Schnittstelleneinheiten 742, 743 und 744 eingezeichnet sind. Die von einer der Taktquelle 815 entsprechenden Taktquelle synchronisierten Schnittstelleneinheiten liegen parallel an dem Datenbus 732, welcher über eine Treiberstufe mit dem D-Bus der Sammelleitung 72 verbunden ist, sowie an dem zugehörigen Adressenbus und dem Steuerbus aus der Sammelleitung 72. Ferner ist an jede Schnittstelleneinheit je eine Trennstufe 745, 746, 747 angeschlossen, deren jeweiliger Ausgang eine Zweidraht-Steuerlinien 748, 749, 750 ist.

Der mit der Steuerlinien-Anschaltkarte 74 verbundene Steuerlinien- Klemmblock 75 weist demzufolge acht Anschlüsse von je einer Zweidraht-Steuerleitung auf, die mit je einer Sprechstelle 60 gemäß Figur 8 verbunden werden können. Mithin können an die dreizehn Steuerleitungs-Anschaltkarten 73, welche an die Linienprozessoreinheit 71 anschließbar sind, über ihre zugehörigen Steuerleitungs-Klemmblöcke bis zu 13 x 8 = 104 Sprechstellen-Steuerleitungen von Sprechstellen 60 angeschlossen werden. Zweckmäßig besitzt jede Sprechstelle 60 neben den üblichen a,b-NF-Leitungen nur eine Zweidraht-Steuerleitung, über die der gesamte Steuersignalaustausch für alle an der Sprechstelle 60 vorgesehenen Tasten und Lampen mit der Steuerleitungs-Anschaltkarte 74 abgewickelt wird.

Im Unterschied zu den herkömmlichen, an die Linienanschlüsse Li 1, ..., Li 2496 anschließbaren Sprechstellen ist die Sprechstelle 60 mit einer Mikroprozessorbaugruppe 62, die einen Mikroprozessor nebst Speicher EPROM und RAM enthält, einem Adreßdekoder 64, einer Schnittstelle 66 mit vorgeschalteter Trennstufe 65, sowie einem Eingaberegister 68 und einem Ausgaberegister 69 ausgerüstet. Ein sprechstelleninterner Datenbus 61 verbindet die Schnittstelle 66 mit der Mikroprozessorbaugruppe 62 sowie mit dem Eingaberegister 68 und dem Ausgaberegister 69. Der Adreßdekoder 64 ist über einen Adressenbus 63 mit der Mikroprozessorbaugruppe 62 verbunden, und schließlich verbindet ein Steuerbus 67 das Eingaberegister 68, das Ausgaberegister 69, die Schnittstelle 66, den Adreßdekoder 64 und die Mikroprozessorbaugruppe 62 miteinander. Das Ausgaberegister 69 steuert das Ein- und Ausschalten der an es angeschlossenen Lampen (leuchtdioden) 610 sowie den Lautsprecherverstärker 630 und den Mikrofonverstärker 640 der Sprechstelle und das Eingaberegister 68 nimmt die Steuersignale aus den an es angeschlossenen Tasten 620 der Sprechstelle 60 auf.

Eine derartige Ausgestaltung der Sprechstelle 60 hat den Vorteil, daß der Linienprozessor 71 von einem Teil seiner Abfrageroutinen und Signalisierungsroutinen entlastet wird, weil er nur noch sprechstellenspezifische und nicht mehr auch linienspezifische Abfragen und Signalisierungen durchzuführen hat. Es genügt, wenn der Linienprozessor 71 aus einer der angeschlossenen Zweidraht-Steuerleitungen 748, 749, 750 Datenwörter erhält, von denen jedes eine Information über den Status einer der Tasten 620 der Sprechstelle 60 enthält. Entsprechend kann der Linienprozessor 71 Datenwörter auf eine der angeschlossenen Zweidraht-Steuerleitungen 748, 749, 750 geben, von denen jedes die Art des Signals und beispielsweise die Ziellampe aus den Lampen 610 der Sprechstelle 60 bezeichnet. Durch diese Form der Erfindung können an der Sprechstelle zusätzliche Tasten vorgesehen werden, ohne daß dadurch eine Änderung an der Vermittlungseinrichtung erforderlich werden würde.

Die Mikroprozessorbaugruppe 62 der Sprechstelle führt aufgrund des in den Speichern EPROM und RAM gespeicherten Programms die Abfragezyklen für die Tasten 620 der Sprechstelle 60 selbständig durch und gibt durch den Vergleich aufeinanderfolgender Abfragezyklen ergebender Statusänderungen gebildete Datenwörter über die Schnittstelle 66 und die Trennstufe 65 auf die Zweidraht-Steuerleitung 650, welche zu einer der Steuerlinien-Anschaltkarten 73 führt. Dort gelangen die Datenwörter beispielsweise über die Trennstufe 745 und die Schnittstelle 742 auf den Datenbus 732, welcher die Datenwörter dem Linienprozessor 71 zuleitet. Der Linienprozessor 71 braucht aus diesen Datenwörtern dann im wesentlichen nur noch die zugehörigen Datentelegramme zur Weitergabe an den Vermittlungsrechner 1 über die schnellen Datenleitungen 12, 11, 10 zu bilden.

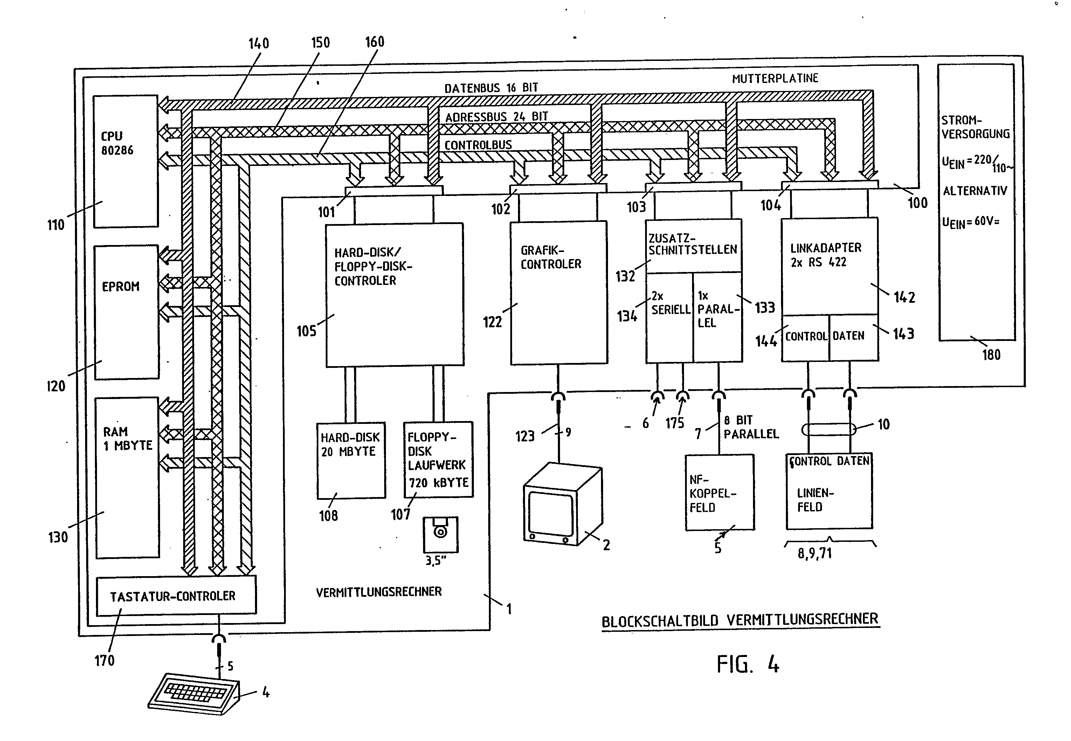

Figur 4 zeigt schließlich den Aufbau des Vermittlungsrechners 1, welcher auf einer Mutterplatine 100 einen Prozessor 110, einen Betriebsprogrammspeicher EPROM 120 und einen Arbeitsspeicher RAM 130 mit einem Fassungsvermögen im dargestellten Ausführungsbeispiel von wenigstens 1 MByte besitzt. Ein sechzehn Bit breiter Datenbus 140, ein vierundzwanzig Bit breiter Adressenbus 150 sowie ein Steuersignalbus 160 verbinden sowohl den Prozessor 110 mit den Speichern 120 und 130, wie auch diese Baugruppen mit Anschlüssen 101, 102, 103, 104 und mit einer Tastatur-Steuerstufe 170. Mit dem Anschluß 101 ist eine Speicherplattensteuerung 105 verbunden, welche das Abspeichern von Daten beispielsweise eines internen Vermittlungsplans auf einer eingebauten Speicherplatte 108 mit einem Fassungsvermögen von beispielsweise 20 MByte oder einer Foppy-Disk-Platte sowie deren Auslesen von den genannten Speichermedien in den Speicher 130 steuert. Dazu ist der Vermittlungsrechner 1 mit einer Floppy-Disk-Station 107 ausgerüstet, deren Betrieb von der Speicherplattensteuerung 105 gesteuert ist und in die wahlweise Floppy-Disk-Platten eingesetzt werden können. Die Speicherplatte 108 stellt einen nichtflüchtigen Massenspeicher dar, der die gespeicherte Information auch bei Stromausfall o. dgl. bleibend bewahrt. Daher weist der Vermittlungsrechner 1 zweckmäßig eine nicht dargestellte Selbstladeeinrichtung auf, welche das Laden des Prozessors 110 bzw. des Speichers 130 mit dem im Massenspeicher 108 abgespeicherten internen Verbindungsplan erlaubt. Auf der Speicherplatte 108 können zusätzlich Protokolle über die Verbindungen und ihre Dauer abgespeichert und über die Schnittstelle 175 im Drucker 3 ausgedruckt werden.

An den Anschluß 102 ist eine Grafik-Steuerung 122 gekoppelt, die über eine Ausgangleitung 123 mit dem Eingang des Monitors 2 verbunden ist. Die Grafiksteuerung steuert die Anzeigen auf dem Bildschirm des Monitors 2 sowie dessen Betrieb in Abhängigkeit von Befehlen, die sie über den Anschluß 102 aus dem Prozessor 110 erhält.

Mit dem Anschluß 103 ist eine Schnittstellenstufe 132 verbunden, deren einer Teil 133 die Eingangsleitung 7 aus der Prozessoreinheit 51 aufnimmt. Der weitere Teil 134 der Schnittstellenstufe 132 führt zu der freien Schnittstelle 6, an welche die externe Datenübertragungsleitung für externe Eingaben, beispielsweise aus einem entfernten, mit der Verwaltung und dem Betrieb mehrerer Vermittlungseinrichtungen betrauten Büro angeschlossen werden kann.

An den Anschluß 104 schließlich ist ein Adapter 142 angeschlossen, der mit der schnellen Datenleitung 10 gekoppelt ist, wobei ein Datenabschnitt 143 des Adapters 142 die über die Leitung 10 ankommenden Daten aufnimmt bzw. auf die Leitung 10 Daten an die angeschlossenen Linienprozessoreinheiten abgibt und eine Steuerabschnitt 144 des Adapters 142 die auf der Leitung 10 mitgeführten Steuersignale aufnimmt bzw. Steuersignale an diese abgibt.

Schließlich enthält der Vermittlungsrechner 1 einen Stromversorgungsblock 180, welcher in nicht dargestellter Weise die einzelnen Baugruppen des Vermittlungsrechners 1 mit der nötigen Spannung und Strom versorgt.

Die Tastatur 4 ist über eine Eingabeleitung 171 an die Tastatursteuerung 170 angeschlossen. Mit der Tastatur 4 können im Zusammenwirken mit dem Monitor 2 Daten eines Sprechverbindungsplanes über die Tastatursteuerung in den Prozessor 110 eingegeben werden, wie sich aus der nachfolgenden Erläuterung des Vermittlungsrechnerprogramms ergibt. Diese Erläuterung betrifft das vorstehend beschriebene erste Ausführungsbeispiel der erfindungsgemäßen Vermittlungseinrichtung, bei der die Prozessoreinheit 51 über die Leitung 7 an den Vermittlungsrechner 1 angeschlossen ist.

8

Dabei beziehen sich die Angaben zu dem Port-Eingabe-Feld und dem Port-Ausgabe-Feld jeweils auf den Inhalt einer Speicherstelle eines der Eingangsregister 848, 849 bezw. eines der Ausgangsregister 833, 834. Daraus ergibt sich, daß diese Speicherstellen breiter als etwa ein Bit sein können.

Die beigefügten Ansprüche und Zeichnungen sind je für sich und in Kombination ein selbständiges Offenbarungsmittel der Erfindung, so daß dasjenige, was aus der vorstehenden Beschreibung nicht oder nicht hinreichend deutlich entnehmbar sein sollte, aber aus den Ansprüchen und/oder den Zeichnungen erkennbar ist, als zur Erfindung gehörig anzusehen ist.

1. Kurzbeschreibung Software:

1.1) Koppler-Programm:

Das Programm initialisiert beim System-Start alle Kopplerbausteine.
Im Betrieb empfängtes über die Schnittstelle vom Vermittlungs-Rechner Telegramme die angeben, welche NF-Verbindungen durchzuschalten sind und interpretiert diese.

1.2) Programm der Linien-Verarbeitung:

Nach der Initialisierung durch den Vermittlungs-Rechner
- erfaßt das Programm, welche Linientasten gedrückt sind
- schickt die Information über eine Schnittstelle zum Vermittlungs-Rechner
- bekommt vom Vermittlungs-Rechner die Information zurück, welche Linien auf besetzt etc. zu setzen sind
- wertet diese Information aus, indem in bestimmten Zeitintervallen die jeweiligen Linien-LEDs an- oder ausgeschaltet werden

1.3) Programm des Vermittlungs-Rechners:

Das Programm besteht aus 2 Teilen

1.3.1) Initialisierung

Es ist der auf einer Datei gespeicherte Verbindungs-Plan einzulesen und so im RAM abzulegen, daß er mit möglichst geringem Speicher- und Zugriffsaufwand bearbeitet werden kann.

1.3.2) Betrieb:

Das Programm fordert von der Linien-Verarbeitung die Information an, welche Linien betätigt sind.
Daraufhin wird an den Koppler weitergegeben, welche NF-Leitungen durchgeschaltet werden sollen.
An die Linien-Verarbeitung wird die Information geschickt, welche Linien besetzt, anrufend, angerufen oder inaktiv etc. sind.

2. Realisierung des Vermittlungs-Programms

Das Vermittlungs-Programm muß in Abhängigkeit von Linienänderungen bestimmte NF-Leitungen durchschalten sowie Signalisierungs-Änderungen weitergeben.
Die zentrale Datenstruktur des Programms ist daher der Verbindungs-Plan.
Dieser Plan wird benutzerfreundlich am Bildschirm erstellt und geändert.
Beim Systemstart wird er von Datei in den Hauptspeicher eingelesen. Dort muß er mit vertretbarem Speicheraufwand und möglichst hoher Zugriffs-Geschwindigkeit verfügbar sein.

2.1 Verbindungs-Plan

Der Verbindungsplan beinhaltet die Information, welche Sprechstelle über welche Linie mit welchen Sprechstellen (gespeichert in der Verbindungs-Liste) Verbindung aufnehmen kann.

(Linie, Sprechstelle, Taste, Typ, Priorität)

----→ Verbindungs-Liste

Die Verbindungs-Liste besteht aus 10 oder mehreren Sprechstellen, mit denen eine NF-Verbindung aufgebaut werden soll.

Der Typ gibt unter anderem an:

- WL-Verbindung
- EL-Verbindung
- Linie mit Tonruf
- Linie mit Rufspeicherung
- Linie mit Rufweiterschaltung

etc.

Priorität gibt eine von maximal 6 Prioritäts-Ebenen an.


2.1.1. Grafischer Verbindungs-Plan

Ein grafischer Verbindungs-Plan dient zur Veranschaulichung von komplexen Verbindungs-Plänen. Im folgenden Werden die Schreibweisen erklärt:


Schreibweisen:

a)

```
 -------                          -------
 !  i  ! -------------------->    !  j  !
 ------- x                        -------
```

Sprechstelle i kann über Linie x mit Sprechstell j Verbindung aufnehmen.

b)

```
 -------                          -------
 !  i  ! ---------------------->  !  j  !
 ------- x            y           -------
```

wie a) jedoch besitzt Sprechstelle j eine Linie y, über die Signalisierungen ausgegeben werden können.

c)

```
 -------                          -------
 !  i  ! <------------------->    !  j  !
 ------- x            y           -------
```

wie b) jedoch kann Sprechstelle j mit Sprechstelle i über die Linie y Verbindung aufnehmen.

d)

```
 _____                                    _____
!   i   ! ----------------------> !   j   !
 _____  x    !                            _____
               !
               !
               V
           _____
          !   k   !
           _____
```

Sprechstelle i kann über Linie x einen Gruppenruf mit den Sprechstellen j und k ausführen.

Beispiel:

```
 _____                                              _____
!   1   ! <--------------------------------> !   2   !
 _____  1                                    3       _____
   ^                                                   ^
  ! 2                                                 ! 4
  !                                                   !
  !                                                   !
  !                                                   !
  !                                                   !
  !                                                   !
  !                                                   !
  ! 8                                                 ! 5
  V                                                   V
 _____                                              _____
!   3   ! <--------------------------------> !   4   !
 _____  7                                    6       _____
```

### 2.1.2 Bildschirm-Eingabe des Verbindungs-Plans

Um einen Verbindungsplan möglichst benutzerfreundlich aufbauen und ändern zu können, wird pro Sprechstelle eine Bildschirmseite wie folgt aufgebaut.

```
Sprechstellen - Nummer:  1      Sprechstellen - Name: Kantine
------------------------------------------------------------------
                    : Zielsprechstellen
                    :   1     !   2    !   3    !   4    !   5
Taste!Linie!Typ!Prio: S ! L |T! S ! L|T! S ! L|T! S ! L|T! S ! L  !
------------------------------------------------------------------
  1 !  1  !   !    : 2 ! 3|1!
------------------------------------------------------------------
  2 !  2  !   !    : 3 ! 8|1!
------------------------------------------------------------------
  3 !     !   !    :   !   |   !
------------------------------------------------------------------
```

In diesem Beispiel besitzt Sprechstelle Nr. 1 zwei Tasten. Über Taste 1 (entspricht Linie 1 ) kann mit Sprechstelle 2 Verbindung aufgenommen werden. Die entsprechende Linie, die bei Anruf mit dem Anruf-Signal signalisiert wird, ist Linie Nr. 3.

### 2.1.3 Speicherung auf Datei:

Für jede Linie ist pro Gegensprechstelle auf Datei der folgende Datensatz gespeichert:

|  | Anzahl Bytes |
|---|---|
| - Linien-Nr | 2 |
| - Sprechstellen-Nr. | 1 |
| - Tasten | 1 |
| - Typ-Nr. | 1 |
| - Priorität | 1 |
| - Zielsprechstelle | 1 |
| - Linie der Zielsprechstelle | 2 |

### 2.1.4 Interne Datenstruktur:

Folgende Datenstruktur stellt einen Kompromiß dar zwischen Speicheraufwand und Zugriffs-Geschwindigkeit.

Vermittlungs-Tabelle:

Zu jeder Linie des Systems wird die folgende Information gespeichert:

| Linie | Sprechstelle | Taste | Status | Typ | Prio | Verbindungs-Liste | Besetzt-Liste |
|---|---|---|---|---|---|---|---|
| x | i |  |  |  |  | j.y | k.z |

Die Notation j.y bedeutet hier, daß die Liste der Zielsprechstellen zu Linie x aus dem Paar (Sprechstelle j, Linie y) besteht.

Für die Vermittlungs-Tabelle können folgende Werte direkt aus dem auf Datei stehenden Verbindungs-Plan übernommen werden:
- Linie
- Sprechstelle
- Taste
- Typ
- Prio
- Verbindungs-Liste

Der aktuelle Status der jeweiligen Linie kann folgende Werte annehmen:
- unbenutzt
- inaktiv
- anrufend
- angerufen
- besetzt.

Bei der Initialisierung der Vermittlungs-Tabelle wird außerdem die Besetzt-Liste generiert.
Sie beinhaltet alle Linien, die besetzt sind, sobald die Linie x betätigt wird.
Da dadurch Sprechstelle i und Sprechstelle j miteinander verbunden werden sind, dies alle Linien, die mit den Sprechstellen i oder j Verbindung aufnehmen können.
In diesem Fall ist dies die Linie k.z.

Für das Beispiel aus 2.1.1 ergibt sich damit die folgende Vermittlungs-Tabelle:

12

| Linie | Sprechstelle | Taste | Status | Typ | Prio | Verbindungs-Liste | Besetzt-Liste |
|-------|--------------|-------|--------|-----|------|-------------------|---------------|
| 1 | 1 | 1 | | | | 2.3 | 4.5, 3.8 |
| 2 | 1 | 2 | | | | 3.8 | 2.3, 4.6 |
| 3 | 2 | 1 | | | | 1.1 | 4.5, 3.8 |
| 4 | 2 | 2 | | | | 4.5 | 1.1, 3.7 |
| 5 | 4 | 1 | | | | 2.4 | 1.1, 3.7 |
| 6 | 4 | 2 | | | | 3.7 | 2.4, 1.2 |
| 7 | 3 | 1 | | | | 4.6 | 2.4, 1.2 |
| 8 | 3 | 2 | | | | 1.2 | 2.3, 4.6 |

2.2 Beispiel für einen Ablauf im Vermittlungs-Programm

Im vorangegangenen Beispiel wird Taste 2 an Sprechstelle 4 gedrückt.
→ von der Linien-Verarbeitung kommt die Information
< Linie 6, Status = Taste gedrückt>
Im Vermittlungs-Programm werden damit die folgenden Schritte bearbeitet:

2.2.1) Ermitteln, welche NF-Leitungen durchzuschalten sind und diese Information an Koppler schicken

Die Verbindungs-Liste von Linie 6 besteht nur aus dem Element 3.7 (Sprechstelle 3, Linie 7)
Damit ist an den Koppler die Information
<Sprechstelle 4,
Zielsprechstelle 3, Status = Verbindung aufbauen>
weiterzugeben.

2.2.2) Status-Änderungen bestimmen und an Linien-Verarbeitung weitergeben

- der Status der anrufenden Linie ist auf "anrufend" zu setzen d.h. Status [6] = anrufend
- der Status der angerufenen Linien (7) ist auf "angerufen" zu setzen, d.h. Status [7] = angerufen
damit ist an die Linien-Verarbeitung die Information
< Linie 7, Status = angerufen > weiterzugeben.
- der Status der besetzten Linien ist auf "besetzt" zu setzen
Durch Betätigen der Linie 6 werden die Sprechstellen 4 und 3 miteinander verbunden. Alle Linien, die mit diesen Sprechstellen Verbindung aufnehmen können, sind dadurch als "besetzt" zu signalisieren. In diesem Fall sind dies die Sprechstelle 1 mit ihrer Linie 2 sowie die Sprechstelle 2 mit ihrer Linie 4 (Besetzt-Liste: 2.4, 1.2).
Damit ist an die Linien-Verarbeitung die Information
< Linie 4, Status = besetzt > und
< Linie 2, Status = besetzt >
weiterzugeben.
Hierdurch erscheint an Taste 2 von Sprechstelle 1 und an Taste 2 von Sprechstelle 2 ein Besetzt-Signal.
Die Vermittlungs-Tabelle sieht nach diesen Aktionen wie folgt aus:

13

| Linie | Sprechstelle | Taste | Status | Typ | Prio | Verbindungs-Liste | Besetzt-Liste |
|-------|--------------|-------|--------|-----|------|-------------------|---------------|
| 1 | 1 | 1 | inaktiv | | | 2.3 | 4.5, 3.8 |
| 2 | 1 | 2 | besetzt | | | 3.8 | 2.3, 4.6 |
| 3 | 2 | 1 | inaktiv | | | 1.1 | 4.5, 3.8 |
| 4 | 2 | 2 | besetzt | | | 4.5 | 1.1, 3.7 |
| 5 | 4 | 1 | inaktiv | | | 2.4 | 1.1, 3.7 |
| 6 | 4 | 2 | anrufend | | | 3.7 | 2.4, 1.2 |
| 7 | 3 | 1 | angerufen | | | 4.6 | 2.4, 1.2 |
| 8 | 3 | 2 | inaktiv | | | 1.2 | 2.3, 4.6 |

## 3. Realisierung des Linien-Programmes

### 3.1 Die Tasks des Linien-Programms

Das Linienprogramm besteht im wesentlichen aus 3 Tasks, die bestimmte Zeitbedingungen einhalten müssen:

#### 1.) Linienabfrage-Task

Es muß gewährleistet werden, daß alle Linien eines Einschubs alle 50 ms abgefragt werden.

Die Linien sind jeweils 8-Bit-weise abzufragen. Hierzu ist auf pos. signalisierte Linien vorher kurz eine 0 auszugeben, um Tastenbewegungen erkennen zu können.

Danach ist für jede Linie abzufragen, ob sie sich gegenüber der letzten Abfrage geändert haben. Hat sich eine Linie geändert, so ist die Information

<Linien-Nr, Status >

an die Zentrale weiterzugeben.
Der Status kann hierbei folgende Zustände annehmen:

      0 - gedrückte Taste wieder losgelassen
      1 - Taste nach höchstens 3 Sek. wieder gedrückt (Rufton über Taste)
      2 - Taste nach höchstens 15 Sek. wieder gedrückt (Ablaufwiederholung)
      3 - Taste nach höchstens 20 Sek. wieder gedrückt (Verstärker bei Erstruf)
      4 - Taste nach höchstens 25 Sek. wieder gedrückt (Vorabtonruf)
      5 - Taste nach mehr als 25 Sek. wieder gedrückt.

#### 2.) Task zum Abholen von Signalisierungs-Änderungen

Nachdem die Zentrale die Linienänderungen verarbeitet hat, gibt sie die Signalisierungs-Änderungen an die Linien-Prozessoren zurück. Diese müssen rechtzeitig abgeholt werden.
Die Signalisierungs-Änderungen kommen in der Form

< Linien-Nr, Status >

an. Hierbei kann Status die folgenden Werte annehmen:

      0 - inaktiv
      1 - Besetzt-Signal
      2 - Anruf-Signal
      3 - Prioritäts-Anzeige
      4 - Ruf-Speicherung
      5 - Konferenz-Schaltung

Abhängig von diesem Status werden die Bytes, die zu einem bestimmten Zeitpunkt auf die Linien auszugeben sind, abgespeichert.

14

3.) Signalisierungs-Task

Abhängig von der Signalisierung einer Linie müssen in bestimmten Zeitintervallen geänderte Linienausgabe-Bits auf die Linien ausgegeben werden.

Die Prioritäts-Anzeige ist ein Besetzt-Signal für eine Linie, die höhere Priorität hat als die Linie, die durch ihren Ruf diese Linie auf besetzt gesetzt hat. Ein Tastendruck ist nur im Zeitintervall VI feststellbar.

3.3 Linien-Datenstrukturen:

1.) Zeitintervall-Signalisierungs-Tabelle:

|    |               | B | P | A | R | K |
|----|---------------|---|---|---|---|---|
| I  | 0 bis 50 ms   | 1 | 1 | 1 | 1 | 1 |
| II | 50 bis 100 ms | 1 | 1 | 1 | 0 | 0 |
| III| 100 bis 150 ms| 1 | 1 | 1 | 0 | 1 |
| IV | 150 bis 250 ms| 1 | 1 | 0 | 0 | 0 |
| V  | 250 bis 400 ms| 1 | 1 | 1 | 0 | 0 |
| VI | 400 bis 500 ms| 1 | 0 | 0 | 0 | 0 |

Diese Tabelle gibt an, wie das Signalisierungsbit in einem bestimmten Zeitintervall in Abhängigkeit vom Linienausgabestatus aussieht.

2.) Linien-Status-Matrix:

Die Linien-Status-Matrix ist eine Matrix der Größe
[MAX-LINIEN-KARTEN] [MAX-LINIEN-BITS] .
Jedes Matrix-Element besteht aus einem Paar
(Eingabe-Status, Ausgabe-Status),
wobei Eingabestatus
Taste losgelassen, Taste nach bestimmter Zeit wieder gedrückt etc.
und Ausgabestatus
besetzt, inaktiv etc.
bedeuten kann.

3.) Port-Eingabe-Feld

Dieses Feld speichert jeweils die aktuellste 8-bit Linienport-Eingabe ab
Wird ein Port eingelesen, kann damit leicht durch eine EXOR- Verknüpfung überprüft werden, ob und welche Linien sich geändert haben.

4.) Port-Ausgabe-Feld

Diese Matrix hat die Größe
[MAX-PORTS] [ZEIT-INTERVALLE] .
In ihr ist für jedes Zeit-Intervall und für jeden Port das aktuelle Signalisierungsbyte gespeichert.

3.2 Signalisierungs-Zeitintervalle:

```
 0.0      0.1       0.2       0.3       0.4      0.5
 !---!---!---!---!---!---!---!---!---!---!        --> Sekunden


 _____   _____    (B)esetzt-Signal



 _____!              (P)rioritäts-Signal
                                      _____


 _!_____   _____           _____        4Ez  (A)nruf-Signal
        !      !            .  !
        _____        _____


 _____                                              Blitz (R)uf-
      !                                             speicherung
      _____


 _____   _____                                      Doppel-Blitz
     ! .! !                                         (K)onferenzschaltg.
 _____   _____


 !--!---!---!---!---!---!---!---!---!---!           --> Sekunden

  1   1   1   1   1   1   1   1   1   1      B
  1   1   1   1   1   1   1   1   0   0      P
  1   1   1   0   0   1   1   1   0   0      A
  1   0   0   0   0   0   0   0   0   0      R
  1   0   1   0   0   0   0   0   0   0      K

 !---!---!---!-------!-----------!-----!
  I   II III   IV       V           VI
```

Hieraus folgt, daß pro Sekunde 6 Zeitintervalle zu unterscheiden sind, die geänderte Signalisierung erfordern.

**Ansprüche**

1. Frei programmierbare Vermittlungseinrichtung für eine WL-Lautsprecheranlage mit einem Zentralrechner, in welchem ein Sprech-Verbindungsplan gespeichert ist und an welchen wenigstens eine Linien-Anschalteinheit und eine NF-Koppeleinheit angeschlossen sind, wobei an die Linien-Anschalteinheit mehrere Linien-Leitungen anschließbar sind, von denen jede zu einer Taste an einer von mehreren Sprechstellen der WL-Lautsprecheranlage führt, und an die Koppeleinheit mehrere tonfrequente Signale übertragende Leitungen anschließbar sind, von denen jede zu einer der Sprechstellen führt, dadurch gekennzeichnet, daß die Koppeleinheit (5) eine NF-Prozessoreinheit (51) aufweist, welche aufgrund von aus dem Zentralrechner (1) empfangenen Steuerdaten den Fluß der in der Koppeleinheit (5) digitalisierten tonfrequenten Signale zwischen wenigstens zwei der angeschlossenen Leitungen (a, b) steuert, und daß die Linien-Anschalteinheit (8, 9) eine Linien-Prozessoreinheit (81, 91, 71) aufweist, welche aus den von den angeschlossenen Linien-Leitungen (Li 1, ...) aufgenommenen Signalen für die Linien, die sie bearbeitet Informationsdaten bildet und dem Zentralrechner (1) oder gegebenenfalls weiteren Linien-Prozessoreinheiten zuführt und aus vom Zentralrechner oder den weiteren Linien-Prozessoreinheiten aufgenommenen Steuerdaten Signale für die angeschlossenen Linienleitungen (Li 1, ...) bildet.

2. Einrichtung nach Anspruch 1, dadurch gekennzeichnet, daß an den Zentralrechner (1) eine Eingabeeinheit (2, 4) anschließbar ist, mit welcher ein gewünschter Verbindungsplan in den Zentralrechner eingebbar ist.

3. Einrichtung nach einem der vorstehenden Ansprüche, dadurch gekennzeichnet, daß in einem nichtflüchtigen Massenspeicher (108) des Zentralrechners (1) ein erstes Programm gespeichert ist, welches aus den über die Eingabeeinheit (2, 4) eingegebenen Daten eines Sprechverbindungsplans einen internen Verbindungsplan erstellt und im Speicher abspeichert, welcher das zu jeder möglichen Verbindung zwischen Sprechstellen gehörende Durchführungsprogramm enthält.

4. Einrichtung nach Anspruch 3, dadurch gekennzeichnet, daß das erste Programm aus dem Sprechverbindungsplan den internen Verbindungsplan sowie einen Verdrahtungsplan für den Anschluß der Linienleitungen und der NF-Leitungen erstellt.

5. Einrichtung nach einem der vorstehenden Ansprüche, dadurch gekennzeichnet, daß der Zentralrechner (1) wenigstens eine Floppy-Disk Station (107) sowie eine programmgesteuerte Übergabeeinrichtung aufweist, welche das Abspeichern und das Erstellen eines oder mehrerer eingegebener Sprechverbindungspläne oder eines oder mehrerer interner auf einem anderen Rechner erarbeiteter Verbindungspläne erlaubt.

6. Einrichtung nach einem der vorstehenden Ansprüche, dadurch gekennzeichnet, daß der Zentralrechner (1) eine von der Eingabeeinheit (2, 4) ansteuerbare Auswahleinrichtung aufweist, welche die Auswahl eines der abgespeicherten Sprechverbindungspläne für den Betrieb der Koppeleinheit (5) sowie der Linien-Anschalteinheit (8) erlaubt.

7. Einrichtung nach einem der vorstehenden Ansprüche, dadurch gekennzeichnet, daß der Zentralrechner (1) eine freie Schnittstelle (6) aufweist, an welche eine Datenübertragungsleitung aus einer entfernten Ein-/Ausgabeeinheit anschließbar ist.

8. Einrichtung nach einem der vorstehenden Ansprüche, dadurch gekennzeichnet, daß der Zentralrechner (1) eine Protokolliereinrichtung aufweist, die das Abspeichern aller während einer vorgegebenen Zeitspanne realisierten Verbindungen zwischen Sprechstellen und deren Dauer sowie Störungen und Fehlermeldungen auf dem Massenspeicher (108) erlaubt.

9. Einrichtung nach einem der Ansprüche 3 bis 7 dadurch gekennzeichnet, daß der Massenspeicher (108) eine im Zentralrechner (1) fest eingebaute Hard-Disk ist und der Zentralrechner mit einer Selbstladeeinrichtung ausgerüstet ist, welche beispielsweise nach Stromausfall ein Laden mit dem auf dem Massenspeicher gespeicherten Programm erlaubt.

10. Einrichtung nach einem der vorstehenden Ansprüche, dadurch gekennzeichnet, daß der Zentralrechner (1) mit einem Druckeranschluß (175) sowie mit einer programmgesteuerten Drucker-Ausgabeeinrichtung ausgerüstet ist, welche das Ausdrucken von abgespeicherten Verbindungsplänen oder von abgespeicherten Protokollen erlaubt.

11. Einrichtung nach den vorstehenden Ansprüchen 8-10, dadurch gekennzeichnet, daß die durch die Protokolliereinrichtung abgespeicherten Verbindungen und Fehlermeldungen über den Druckeranschluß (175 ausdruckbar sind.

12. Einrichtung nach einem der vorstehenden Ansprüche, dadurch gekennzeichnet, daß eine Pegelsteuerung für die von der NF-Koppeleinheit (5) abgegebenen tonfrequenten Signale vorgesehen ist, die durch Steuerdaten, welche aus einem im Zentralrechner (1) enthaltenen Programm von diesem abgeleitet werden, steuerbar ist.

13. Einrichtung nach einem der vorstehenden Ansprüche, dadurch gekennzeichnet, daß der Zentralrechner (1) mit einer programmgesteuerten Prüfeinrichtung ausgerüstet ist, welche durch die Eingabeeinheit (2, 4) ansteuerbar ist und wahlweise einzelne Sprechwege zu schalten, einen Dauerton auf eine der Sprechstellen zu geben, die Ausgabe von Steuersignalen über eine oder mehrere Linienleitungen zu veranlassen oder Tastenbetätigungen in den Sprechstellen zu protokollieren gestattet.

14. Einrichtung nach einem der vorstehenden Ansprüche, dadurch gekennzeichnet, daß ein oder mehrere Linien-Prozessoreinheiten (81, 91, 71) an den Zentralrechner (1) angeschlossen sind und in jeder Linien-Prozessoreinheit wenigstens der Teil des aktuellen Verbindungsplans gespeichert ist, welcher die von der Linien-Prozessoreinheit bedienbaren Linienleitungen betrifft.

15. Einrichtung nach einem der vorstehenden Ansprüche, dadurch gekennzeichnet, daß in der NF-Prozessoreinheit (51) ein Kopplerprogramm gespeichert ist, welches vom Vermittlungsrechner (1) oder einer Linien-Prozessoreinheit (81, 91, 71) Datentelegramme erhält und auswertet, die angeben, welche NF-Verbindungen zu beeinflussen sind.

16. Einrichtung nach einem der vorstehenden Ansprüche, dadurch gekennzeichnet, daß in dem Zentralrechner (1) oder einer Linien-Prozessoreinheit ein Vermittlungsprogramm gespeichert ist, welches von den Linienprozessoreinheiten (71, 81, 91) Statusangaben der angeschlossenen Linien mittels Datentelegrammen erhält, die Datentelegramme anhand des internen Verbindungsplanes bearbeitet und ermittelt, welche Verbindung zu beeinflussen ist und welche Signalisierungen von den Linienprozessoreinheiten an die angeschlossenen Linien auszugeben sind und die ermittelten Befehle als Datentelegramme der NF-Prozessoreinheit (51) sowie den Linienprozessoreinheiten (71, 81, 91) zuleitet.

17

17. Einrichtung nach einem der vorstehenden Ansprüche, dadurch gekennzeichnet, daß bei der Eingabe eines Sprechverbindungsplans ein Datenformat verwendet wird, welches Angaben vorsieht zur Linie, Sprechstelle, Taste, Typ und Priorität, wobei unter Typ beispielsweise angegeben werden kann, ob eine WL-Verbindung, eine EL-Verbindung, ein Tonruf, eine Rufspeicherung oder eine Rufweiterschaltung gewünscht wird.

18. Einrichtung nach einem der vorstehenden Ansprüche, dadurch gekennzeichnet, daß im Zentralrechner für jede angeschlossene Linie ein Datensatz gespeichert ist, welcher die Liniennummer des Anschlusses, die Sprechstellennummer des Anschlusses, die Tastennummer an der Sprechstelle, den Typ, die Prioritätsstufe, die Zielsprechstellen-Anschlußnummer sowie die Linienanschlußnummer der Zielsprechstelle enthält.

19. Einrichtung nach Anspruch 17 oder 18, dadurch gekennzeichnet, daß für jede Linie ein Protokoll erstellt und während des Betriebes aktualisiert wird, welches Angaben über den Status der Linie sowie über die mögliche Verbindung zu der Sprechstelle, identifiziert durch Sprechstellenanschlußnummer und Linien- ·anschlußnummer, und über die nötigen Besetztsignalisierungen enthält.

20. Einrichtung nach einem der vorstehenden Ansprüche, dadurch gekennzeichnet, daß die Linienprozessoreinheiten (71, 81, 91) über einen seriellen zweiadrigen Datenkanal (10, 11, 12, 13, 14) zur Übertragung von Datentelegrammen untereinander und mit dem Zentralrechner (1) sowie bevorzugt mit der NF-Prozessoreinheit (51) gekoppelt sind, dessen Datenübertragungsgeschwindigkeit wesentlich höher ist als der Abfrage- oder Signalisierungszyklus in einer der Linienprozessoreinheiten.

21. Einrichtung nach einem der vorstehenden Ansprüche, dadurch gekennzeichnet, daß die Koppeleinheit (5) für jede der anschaltbaren NF-Leitungen aus den Sprechstellen einen Analog/Digital-Wandler (544, 545, 546) enthält, in welchem die aufgenommenen analogen NF-Signale digitalisiert werden, und daß in der Koppeleinheit (5) ein Verschiebespeicher (520) enthalten ist, welchem die digitalisierten NF-Signale als Datenwörter zugeführt werden und welcher unter Steuerung von Befehlen die Datenwörter unter Adressen abspeichert, welche einer Zielsprechstelle zugeordnet sind.

22. Einrichtung nach einem der vorstehenden Ansprüche, dadurch gekennzeichnet, daß wenigstens eine Linienprozessoreinheit (71) mit Anschlüssen (748, 749, 750) für Zweidraht-Steuerleitungen ausgerüstet ist, welche zu Sprechstellen (60) führen, die eine Mikroprozessorbaugruppe (62) zur Durchführung der Abtastzyklen für den Status der Tasten (620) der Sprechstelle sowie der Signalisierungen in der Sprechstelle aufgrund von von der Linienprozessoreinheit (71) über die Zweidrahtsteuerleitungen empfangenen Datenwörtern aufweist.

FIG. 1

FIG. 2

NF-PROZESSOR

*0*

NF-ANSCHALTKARTE

# FIG. 3

BLOCKSCHALTBILD VERMITTLUNGSRECHNER

FIG. 4

EP 0 333 051 A2

LINIENPROZESSOR

FIG. 5

LINIENANSCHALTKARTE     FIG. 6

ANSCHALTKARTE FÜR 2-DRAHT-STEUERUNG          FIG. 7

MIKROPROZESSORGESTEUERTE SPRECHSTELLE
BLOCKSCHALTBILD

## FIG. 8